# EUROPÄISCHE PATENTSCHRIFT

(11) **EP 0 591 467 B1**
(45) Veröffentlichungstag und Bekanntmachung des Hinweises auf die Patenterteilung: **20.12.1995**
(21) Anmeldenummer: 92917327.6
(22) Anmeldetag: 29.05.1992
(51) Int. Cl.: F03D 1/04

(54) **VERFAHREN UND EINRICHTUNG ZUR ERZEUGUNG VON NUTZBARER ENERGIE AUS PARALLELSTRÖMUNGEN**
PROCESS AND INSTALLATION FOR PRODUCING USEABLE ENERGY FROM PARALLEL FLOWS
PROCEDE ET INSTALLATION DESTINES A PRODUIRE DE L'ENERGIE EXPLOITABLES A PARTIR DE D'ECOULEMENTS PARALLELES

(30) Priorität: 29.05.1991 DE 4117838
(43) Veröffentlichungstag der Anmeldung: 13.04.1994
(73) Patentinhaber: SCHATZ, Jürgen, D-10365 Berlin (DE); SCHATZ, Olaf, D-10247 Berlin (DE)
(72) Erfinder: SCHATZ, Jürgen, D-10365 Berlin (DE); SCHATZ, Olaf, D-10247 Berlin (DE)
(74) Vertreter: Ziebig, Marlene, Dr. Dipl.-Chem.
(86) Internationale Anmeldenummer: DE9200450
(87) Internationale Veröffentlichungsnummer: WO9221878

(56) Entgegenhaltungen:
- EP-A- 0 077 698
- DE-A- 2 402 647
- DE-A- 3 330 899
- DE-C- 823 430
- US-A- 4 452 562

## Beschreibung

Die Erfindung bezieht sich auf ein Verfahren zur Erzeugung von nutzbarer Energie aus Parallelströmungen, insbesondere aus anströmendem Wind beliebiger sowie wechselnder Richtungen und Geschwindigkeiten nach dem Oberbegriff des Hauptanspruchs und auf eine Einrichtung zur Durchführung des Verfahrens.

Das erfindungsgemäße Verfahren und die Einrichtung ermöglichen die Ausnutzung sehr geringer Strömungsgeschwindigkeiten ab etwa 1,5 bis 2 m/s und die Ausnutzung der Energie bei allen auftretenden Windgeschwindigkeiten. Die Windverhältnisse der Standorte für die Anwendung des erfindungsgemäßen Verfahrens sind von untergeordneter Bedeutung, es sollte lediglich die freie Anströmung der erfindungsgemäßen Einrichtungen gewährleistet sein. Besonders vorteilhaft ist die Erfindung zur Versorgung von einzelnen Wohnbauten oder höheren Gebäuden anwendbar, auf die die erfindungsgemäße Einrichtung unter Nutzung der vorhandenen Bausubstanz aufgesetzt werden können.

Zur Erzeugung von Elektroenergie werden Windkraftanlagen mit Rotoren größerer Durchmesser errichtet und betrieben. Nachteilig bei diesen Anlagen sind einerseits die Aufwendungen zur Errichtung, andererseits die energetischen Grenzen. Bei höchsten Leistungsangebot des Windes müssen diese Anlagen außer Betrieb genommen werden oder werden leicht zerstört. Mit der Erhöhung der installierten elektrischen Leistung muß der Rotordurchmesser vergrößert werden, dadurch treten technische Probleme durch Schwingungen auf und Schallemissionen und die Gefahr von Rotorblattbrüchen sind nicht auszuschließen. Für kleinere Leistungen ist eine Windkraftanlage mit senkrechten Rotorblättern bekannt, die hohe Windgeschwindigkeiten annimmt. Durch konzentrierende Einrichtungen wurde versucht, die Durchmesser der Rotorblätter kleiner auszuführen, da durch die Einrichtungen höhere Strömungsgeschwindigkeiten im Bereich des Rotors erzielt werden. Dabei wird die Erkenntnis genutzt, daß zwischen der Elektrotechnik und der Strömungstechnik eine Analogie besteht. Diese liegt darin, daß ein elektromagnetisches Feld in einem beliebig gebogenen drahtförmigen Leiter und ein Strömungsfeld um einen beliebig geformten Wirbelfaden durch den gleichen Zusammenhang, das Biot-Sawartsche Gesetz, beschrieben werden.

Aus der DE-PS 33 30 899 ist eine Anordnung bekannt, in der Tragflügel kreisförmig vor einer Windturbine angeordnet werden, wodurch eine Wirbelspule erzeugt wird, da Wirbelfäden aus dem frei umströmenden Wind von den Tragflügeln abreißen, ein Strömungsfeld induzieren und dieses Strömungsfeld die Geschwindigkeit des axialen Stromes erhöht. Mit kleinen Rotordurchmessern können große Leistungen abgenommen werden, wobei der Verstärkungsfaktor mit 6 bis 8 angegeben wird. Nachteilig ist der hohe Aufwand dieser Anlage, so daß nur eine kleine Versuchsanlage bekannt wurde. Die wirbelerzeugenden Elemente oder Tragflügel verhalten sich bei steigenden Windgeschwindigkeiten instabil und erfordern zusätzlichen konstruktiven Aufwand und wirtschaftlich ist die bekannte Anordnung nach dem Stand der Technik nicht genutzt worden.

Aus der US 4 452 562 ist eine Tornado-Windturbine bekannt, die einen vertikal angeordneten Windturm mit einer Längsöffnung für einen tangentialen Eintritt des Windes aufweist. Der Turm ist nach oben offen und weist nach unten eine Durchströmöffnung auf, an die sich eine dem Wind ausgesetzte Windkammer anschließt. In der Durchströmöffnung ist eine Turbine angeordnet. Der Windturm ist doppelwandig ausgebildet, wobei der Raum zwischen den Wänden mit der Windkammer verbunden ist, so daß sich eine Strömung in diesem Raum ausbilden kann. Der untere Bereich der inneren Wand des Windturmes ist porös ausgebildet, so daß die radialströmende Luft mit der tangential in den Windturm einströmenden Luft zusammenwirken kann, wodurch sich eine Wirbelströmung ausbildet, die nach oben hin austritt und einen Unterdruckkern bildet und Luft durch die Öffnung der Windkammer über die Turbine ansaugt. der Nachteil dieser Anordnung liegt darin, daß sehr große Bauformen benötigt werden, um die gewünschte Wirkung zu erzielen.

Der Erfindung liegt die Aufgabe zugrunde, ein Verfahren und eine Einrichtung zur Erzeugung von nutzbarer Energie aus Parallelströmungen zu schaffen, die eine wirtschaftliche Umwandlung der in Parallelströmungen, wie sie beispielsweise durch den Wind vorgegeben werden, enthaltenen Energie bei allen Geschwindigkeitsbereichen zu ermöglichen, wobei eine Schädigung der natürlichen Umwelt auch im Dauerbetrieb ausgeschlossen sein soll.

Diese Aufgabe wird erfindungsgemäß durch die kennzeichnenden Merkmale des Hauptanspruchs und des nebengeordneten Einrichtungsanspruchs gelöst.

Erfindungsgemäß wird eine Strömungsmodul, das von den Erfindern auch Agensetage genannt wird, von der Parallelströmung angeströmt. Dabei weist das Strömungsmodul einen äußeren Hohlkörper auf, der aus Klappen oder entsprechenden bewegbaren Elementen gebildet wird und der von Anströmsäulen umgeben wird. Die Anströmsäulen sind frei umströmbar und der Staudruck der Parallelströmung bewegt im Druckbereich die Klappen des äußeren Hohlkörpers nach innen und öffnet sie, während andere Klappen nach außen, d.h. in den geschlossenen Zustand durch den sich in dem Hohlkörper ausbildenden Gesamtdruck gedrückt werden. Wechselt die Anströmrichtung, verlagert sich der Staudruck über den Umfang des Hohlkörpers. Es werden die diesem Punkt entsprechenden Klappen geöffnet und alle anderen werden geschlossen, so daß durch die Klappen eine selbsttätige Windnachführung ermöglicht wird. Unter Nutzung des Staudrucks wird eine Strömung aus beliebig wechselnden Anströmrichtungen tangential in den äußeren Hohlkörper eingeleitet und es bildet sich in diesem eine Spiralströmung aus, die nach dem Drehimpulserhaltungssatz geschwindigkeitserhöht tangential einen inneren Hohlkörper, der von den Erfindern auch Agenszylinder genannt wird, angeströmt.

Die Spiralströmung wird mittels Trennscheiben in ungleiche Volumenströme geteilt, wobei in dem Bereich des größeren Volumenstroms der über ein oder mehrere Einströmöffnungen tangential angeströmte innere Hohlzylinder angeordnet ist, in dem sich eine Drallströmung ausbildet, die zu der Ausströmöffnung des inneren Hohlkörpers gerichtet wird, da an ihr durch die überströmende Parallelströmung ein dynamischer Unterdruck erzeugt wird. Die Drallströmung fließt quellend in den überströmenden Parallelstrom und die auftretenden Scherkräfte bilden einen Potentialwirbel nach Art eines Tornados aus, der in der Parallelströmung dreht und mit seinem Wirbelfaden in den inneren Hohlkörper wirkt, wodurch aus dem zweiten Volumenstrom oder von außen her durch eine Durchströmöffnung im Trennelement ein Axialstrom in den inneren Hohlkörper gesaugt wird, der als Arbeitsstrom bezeichnet werden kann, während der Potentialwirbel den Erregerstrom darstellt. Weiterhin wird erfindungsgemäß aus dem zweiten, durch das Trennelement getrennten Volumenstrom über eine Mehrzahl von wirbelerzeugenden Elementen Wirbelströmungen erzeugt, die gleichfalls in den inneren Hohlkörper gesaugt werden und in dem Potentialwirbel eingelagert werden. Die somit hergestellte Potentialwirbelspule erzeugt ein verstärkendes Strömungsfeld im Strömungsmodul.

Auf diese Weise kann die erfindungsgemäße Einrichtung stabil und bei allen Umgebungsverhältnissen mit einem guten Wirkungsgrad betrieben werden und Pulsationen in der Parallelströmung sowie Änderungen der Anströmrichtung haben keinen den Wirkungsgrad vermindernden Einfluß auf die Einrichtung.

Durch die in den Unteransprüchen angegebenen Maßnahmen sind vorteilhafte Weiterbildungen und Verbesserungen möglich. Dadurch, daß die wirbelerzeugenden Elemente im Bereich des zweiten Teilstroms als drehbare Einheit ausgebildet sind, wobei die Drehung durch den Axialstrom oder durch externe Antriebseinheiten erzeugt werden kann und die wirbelerzeugenden Elemente entgegen dem anströmenden Axialstrom rotieren, wird der Gesamtstrom weiter beschleunigt. Die wirbelerzeugenden Elemente können tragflügelartig ausgebildet werden, die Randwirbel erzeugen, wobei diese in einem definierten Winkel in den Potentialwirbel eingelagert werden. Die Wirkung kann auch dadurch verstärkt werden, daß die rotierenden wirbelerzeugenden Elemente mit feststehenden wirbelerzeugenden Elementen kombiniert werden, die unter Ausnutzung des im Wirbelfaden des Potentialwirbels herrschenden Unterdrucks Schlauchwirbel erzeugen und direkt konzentrisch in den Potentialwirbelachsen parallel einleiten.

Die Geschwindigkeitserhöhung des Potentialwirbels bewirkt mittelbar eine Beschleunigung der Drehströmung in dem äußeren Hohlkörper sowie eine Erhöhung der Geschwindigkeit an dessen geöffneten Klappen, so daß vom Staudruck ein größerer Volumenstrom eingeleitet wird. Reicht der Staudruck nicht mehr aus, um den geforderten Volumenstrom zu fördern, wird der statische Druck der Parallelströmung genutzt, welcher die Differenz zur vorhandenen Anströmgeschwindigkeit ausgleicht.

Die Stabilität des erzeugten Potentialwirbels wird erfindungsgemäß noch dadurch erhöht, daß an der Ausströmöffnung des Strömungsmoduls eine kegelstumpfartige Leitvorrichtung angeordnet ist, die den im inneren Hohlkörper herrschenden statischen Überdruck vor Austritt in die Parallelströmung in Strömungsenergie umwandelt. Vorzugsweise sind in der Leiteinrichtung Schlitze vorgesehen, die eine Vielzahl strömungsparalleler Kantenwirbel erzeugt, wobei diese Wirbel den Potentialwirbel beim Austritt aus der Leitvorrichtung umgeben.

Das erfindungsgemäße Strömungsmodul kann einzeln auf vorhandenen Hochbauten angeordnet oder zu turmartigen Bauwerken übereinandergestapelt werden. Eine solche Windenergieanlage kann mit einer Mehrzahl von Modulen leistungsmäßig an den Bedarf angepaßt werden, wodurch die Wirtschaftlichkeit in großem Umfang verbessert wird.

Ausführungsbeispiele der Erfindung sind in der Zeichnung dargestellt und werden in der nachfolgenden Beschreibung näher erläutert. Es zeigen:
- Fig. 1: einen Längsschnitt durch ein Ausführungsbeispiel der erfindungsgemäßen Einrichtung in einer schematischen Darstellung,
- Fig. 2: einen Längsschnitt durch ein weiteres Ausführungsbeispiel der vorliegenden Erfindung mit zwei Strömungsmodulen,
- Fig. 3: einen Längsschnitt durch ein weiteres Ausführungsbeispiel der vorliegenden Erfindung,
- Fig. 4: einen Querschnitt nach den Schnittlinien A-A nach Fig. 1,
- Fig. 5: einen Querschnitt durch das Ausführungsbeispiel nach Fig. 2 zwischen den zwei Strömungsmodulen,
- Fig. 6: eine Anordnung in Turmform mit einer Mehrzahl von übereinander angeordneten Strömungsmodulen, und
- Fig. 7: die Möglichkeit einer Anordnung der Türme nach Fig. 6.

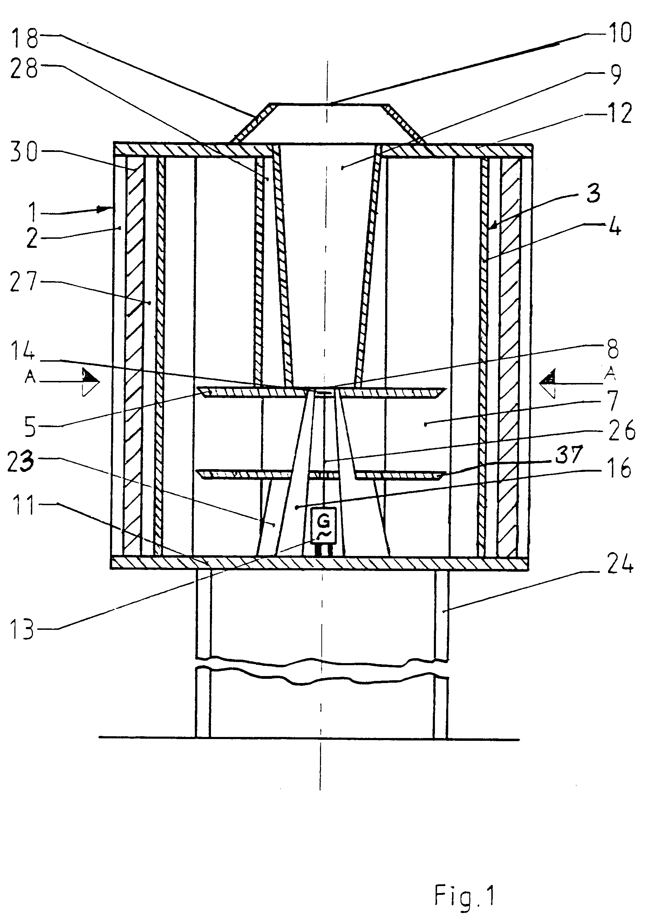

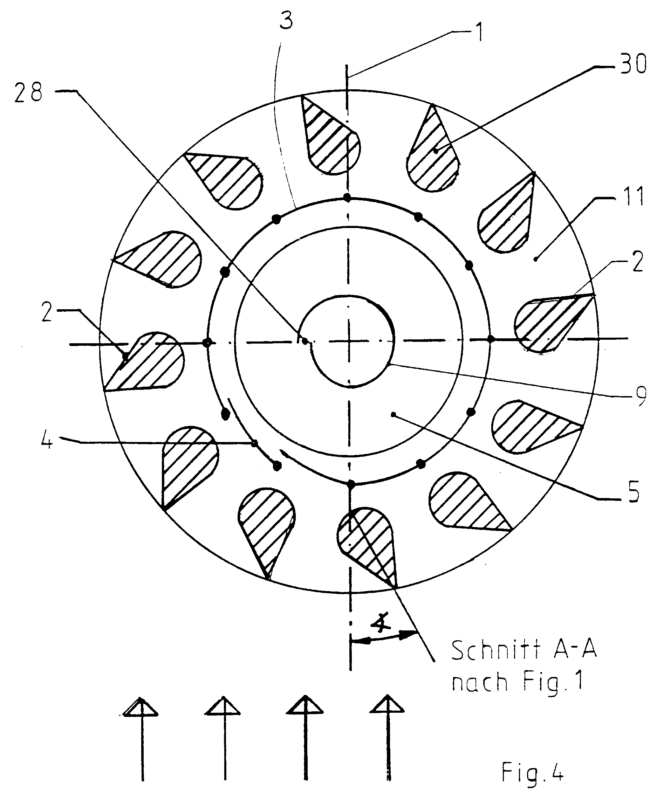

In Fig. 1 und Fig. 4 ist ein erstes Ausführungsbeispiel der erfindungsgemäßen Einrichtung dargestellt, bei der ein Strömungsmodul 1, das von den Erfindern auch Agensetage genannt wird, auf einem Turmschaft 24 angeordnet ist. Das Strömungsmodul 1 weist kreisförmig angeordnete Anströmsäulen 30 auf, die zwischen einer Grundplatte 3 und einer Decke 12 angeordnet sind und fest mit diesen verbunden sind. Die Anströmsäulen weisen einen Querschnitt entsprechend einem Dreieck mit angesetztem Kreisabschnitt auf. Dabei bilden die spitz zulaufenden geraden Flächen der Säulen die Anströmflächen 2. Dabei weist die Querschnittslängsachse der Anströmsäulen 30 zu dem Durchmesser des die Spitzen der Säulen umschreibenden Kreises einen bestimmten Winkel zueinander auf, wie aus Fig. 4 zu erkennen ist. Innerhalb der Säulen ist ein äußerer Hohlkörper, der als Hohlzylinder 3 ausgebildet ist, vorgesehen, der aus einer Vielzahl von an Dreh- oder Schwenkachsen beweglich gelagerten Elementen oder Klappen 4 besteht. Diese Klappen 4 bilden im geschlossenen Zustand die Umfangsfläche des Hohlzylinders 3, der gleichfalls zwischen der Grundplatte und der Decke 12 liegt und fest mit diesen verbunden ist. Konzentrisch zu dem Hohlzylinder 3 ist ein innerer Hohlkörper 9 mit spiralförmigem Querschnitt angeordnet, wobei der Innenteil über seine Länge leicht konisch ausgebildet ist. Über die gesamte Länge des inneren Hohlkörpers 9 ist eine Einströmöffnung 28 für eine tangentiale Einströmung vorgesehen.

Der innere Hohlkörper 9 ist mit seinem einen Ende in die Decke 12 eingesetzt, d.h. er ist im Ausführungsbeispiel nach Fig. 1 nach oben offen, wobei über dem offenen Ende eine konusförmige Leitvorrichtung 18 aufgesetzt ist, die nach oben zuläuft und eine Ausströmöffnung 10 für den inneren Hohlkörper 9 und gleichzeitig für das gesamte Strömungsmodul 1 bildet. Vorzugsweise ist das obere Ende der Leitvorrichtung 18 geschlitzt ausgebildet.

Der äußere Hohlkörper ist als Zylinder und der innere Hohlkörper als spiralförmiger Konus dargestellt, selbstverständlich können beide Hohlkörper andere Formen aufweisen. Auch muß die Einströmöffnung 28 des inneren Hohlkörpers 9 nicht kontinuierlich über die gesamte Länge vorgesehen sein, es können auch mehrere Einströmöffnungen über den Umfang und die Länge des inneren Hohlkörpers 9 spiralförmig verteilt sein.

Innerhalb des Hohlzylinders 3 ist quer zu seiner Längsachse eine erste Trennscheibe 5 vorgesehen, die mittig eine Durchströmöffnung zu dem Innenraum des inneren Hohlkörpers aufweist und fest mit dem unteren Ende des Hohlkörpers 9 verbunden ist. In der Durchströmöffnung 8 ist eine Windturbine 14 angeordnet, die über eine Welle 26 mit einem Generator 13 als Stromwandler verbunden ist. Unterhalb der ersten Trennscheibe 5 ist eine weitere Trennscheibe 37 vorgesehen, die den unteren Volumenstrom nochmals unterteilt. In diesem Bereich sind die Einströmöffnungen 28 für konus- und spiralförmige Düsen als wirbelerzeugende Elemente 16 vorgesehen, die sich in den Innenraum des inneren Hohlkörpers 9 öffnen. Die wirbelerzeugenden Elemente 16 sind ingesamt um die Welle 26 herum drehbar gelagert, wobei die Einrichtungen bzw. deren Teile, welche eine Drehung der wirbelerzeugenden Elemente 16 bewirken, nicht näher dargestellt sind.

Die Funktionsweise der dargestellten Vorrichtung ist wie folgt. Der über den Anströmsäulen 30 mit den Anströmflächen 2 liegende Staudruck einer Parallelströmung, zum Beispiel eines atmosphärischen Windes, öffnet ein Teil der Klappen 4 und schließt alle anderen Klappen 4 durch den im Hohlzylinder 3 entstehenden Gesamtdruck. Im Inneren des Systems herrscht ein Statischer Überdruck. Dies ist beispielsweise in Fig. 4 dargestellt. Wandert der Staudruck über den Kreisumfang, so wechseln die geöffneten und geschlossenen Klappen 4 selbständig mit. Dadurch wird ein quasi drehender Strömungsschirm als Windnachführung gebildet. Die staudruckabhängige Steuerung schließt Windschäden durch Überbelastung sicher aus. Sind alle überdruckbeaufschlagten Klappen 4 geschlossen, leitet der Staudruck eine tangentiale Strömung in den Hohlzylinder 3 des Strömungsmoduls 1 ein. Es wird eine Drehströmung erzeugt, die geschwindigkeitserhöht die Einströmöffnung 28 des inneren Hohlkörpers 9 anströmt. In dem inneren Hohlkörper 9 bildet sich eine Drallströmung aus, der durch den dynamischen Unterdruck der Ausströmöffnung 10 gerichtet ist. Dieser Unterdruck entsteht durch die über das Strömungsmodul 1 überströmende Parallelströmung.

Nachdem die Drallströmung aus der Ausströmöffnung 10 des inneren Hohlkörpers 9 in die überströmende Parallelströmung ausgetreten ist, wird durch die wirkenden Scherkräfte ein Potentialwirbel ausgebildet. Die Leiteinrichtung 18 erzeugt durch die nicht dargestellten Schlitze Kantenwirbel, die außen umlaufend den Potentialwirbel stabilisieren. Unterhalb der Trennscheibe 5 wird die Drehströmung aufgrund des Drehimpulserhaltungssatzes zur Mitte hin weiter beschleunigt und wird als "Arbeitsstrom" durch den mit seinem Wirbelfaden im inneren Hohlzylinder 9 wirkenden Potentialwirbel durch die Durchströmöffnung 8 in den Innenraum des Hohlkörpers 9 gesaugt.

Unterhalb der weiteren Trennscheibe 37 werden gleichfalls die Einströmöffnungen 28 der wirbelerzeugenden Elemente 16, die Schlauchwirbel erzeugen, geschwindigkeitserhöht angeströmt, wobei die Druckdifferenz zwischen dem Wirbelfaden des Potentialwirbels und dem Gesamtdruck an den Einströmöffnungen 28 der wirbelerzeugenden Elemente 16 eine Beschleunigung sowie den Transport der entstehenden Schlauchwirbel in den Innenraum des inneren Hohlkörpers 9 bewirkt. Der Potentialwirbel stellt eine quasi-parallele Strömung dar, in die die Schlauchwirbel eingeprägt bzw. eingelagert werden. Alle die Wirbel- bzw. Strömungsarten treiben die Turbine 14 an, indem eine Potentialwirbelspule hergestellt und stabil betrieben und ein Strömungsfeld induziert wird.

Die Anströmflächen 2 der Anströmsäulen 30 bewirken eine Ausrichtung der aus dem Staudruckfeld resultierenden Strömung auf die zu öffnenden Klappen 4 durch ihre Schrägstellung. Die Anströmrichtung kann über 360° wechseln, wobei die Anströmverhältnisse gleich bleiben. Zugleich sind die Anströmsäulen 30 tragende Elemente der Baukonstruktion und, um sie strömungstechnisch dauerhaft glatt auszuführen, können korrosionsgeschützte Oberflächen hergestellt werden. Zwischen den Anströmsäulen 30 und dem äußeren Hohlkörper 3 wird ein sogenannter Abströmraum 27 gebildet, der einerseits eine Grenzschichtströmung aus dem Staudruckfeld und andererseits auch eine relative Beschleunigung des in den äußeren Hohlkörper einströmenden Volumenstroms bewirkt. Witterungsbedingte Erscheinungen wie Regen oder Schnee oder größere Staubkonzentrationen werden an den Anströmsäulen 30 aufgefangen und im Staudruckfeld umgelenkt. Massereichere Teilchen strömen an den Klappen 4 vorbei in den Abströmraum 27.

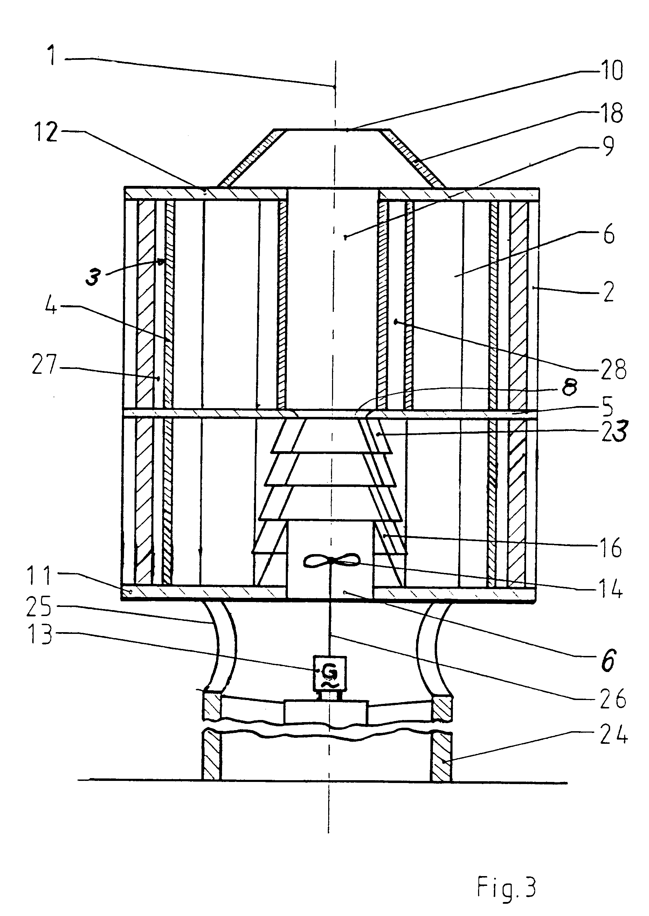

In Fig. 3 ist ein weiteres Ausführungsbeispiel der vorliegenden Erfindung dargestellt, wobei hier der innere Hohlkörper 9 als Hohlzylinder mit tangential angeordneter Einströmöffnung 28 ausgebildet ist. Unterhalb der Trennscheibe 5, die eine Durchströmöffnung freiläßt, sind mehrere übereinander angeordnete konusförmige wirbelbildende Elemente 16 mit seitlichen Einströmöffnungen 23 vorgesehen. In der Grundplatte ist eine Öffnung 6 ausgeformt, die von der Welle der Turbine 14 durchgriffen wird, und in dem Turmschaft 24 sind Lüftungsöffnungen 25 vorgesehen.

Die Funktionsweise ist ähnlich der in Fig. 1, jedoch wird nunmehr die zusätzliche in den Innenraum des inneren Hohlkörpers einströmende Strömung nicht aus der Strömung in dem Bereich 7 unterhalb der Trennscheibe nach Fig. 1 gewonnen, sondern wird durch den Potentialwirbel über die Lüftungsöffnung 25 und die Öffnung 6 in der Grundplatte angesaugt.

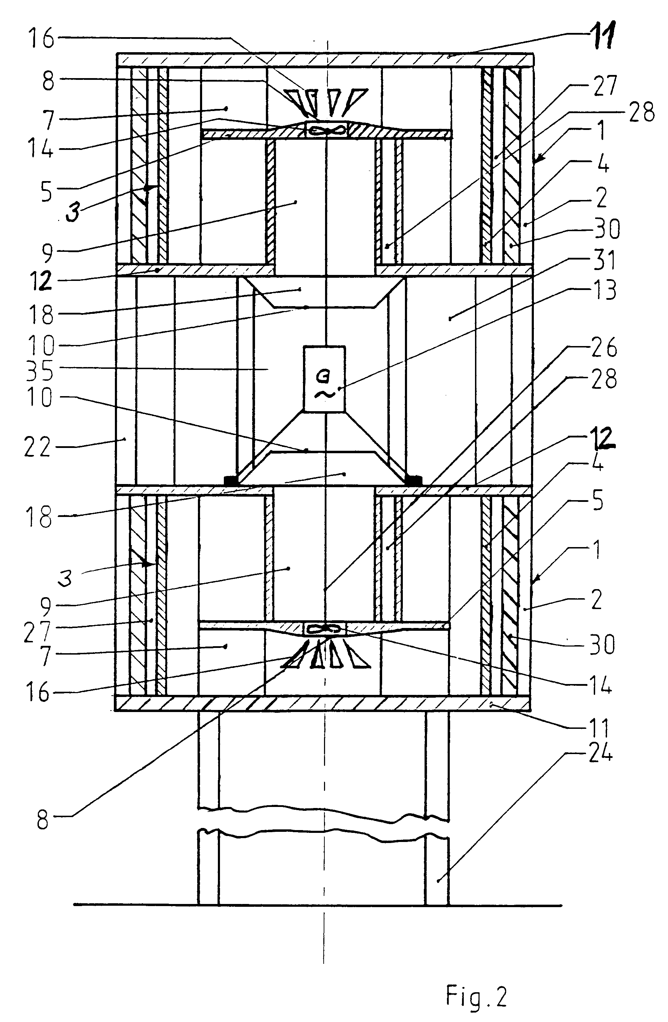

In Fig. 2 sind zwei Strömungsmodule übereinander angeordnet, wobei das obere Strömungsmodul durch Säulen 22 getragen wird, die einen Abstand zwischen den zwei Strömungsmodulen 1 für eine Durchströmung bestimmen. Die wirbelbildenden Elemente 16 sind in diesem Ausführungsbeispiel als tragflügelartige Elemente ausgebildet, die fest an einem nicht dargestellten Gestell kreisförmig um die Durchströmöffnung 8 herum angeordnet sind und insgesamt drehbar gelagert sind. Dabei rotieren die wirbelerzeugenden Elemente 16 entgegen der im Bereich 7 unterhalb der Trennscheibe 5 ausgebildeten Drehströmung, wobei die tragflügelartigen Elemente Randwirbel erzeugen, die zusammen mit der durch die Durchströmöffnung 8 angesaugten Drehströmung in den Potentialwirbel eingelagert werden.

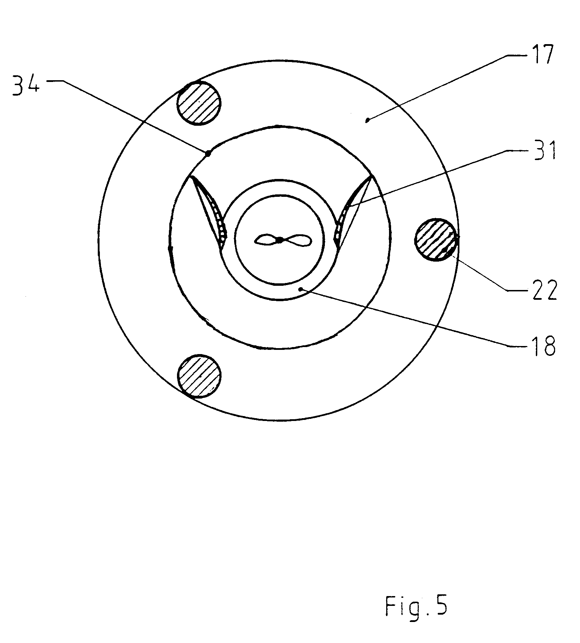

Entsprechend Fig. 5 sind über den Ausströmöffnungen 10 Turbulenzschirme 31 auf einem Drehkreis 34 drehbar gelagert, um die Turbulenzen nach Ausströmen des Potentialwirbels in die überströmende Parallelströmung abzufangen. Die Turbulenzschirme 31 werden vom Wind eingestellt und bewirken ein gesteuertes Abfließen der aus den Ausströmöffnungen 10 austretenden Potentialwirbelspulen. Die aus beiden Strömungsmodulen nach Fig. 2 austretenden Potentialwirbel existieren noch außerhalb des Bereichs der Strömungsmodule 1 fort und bilden durch gegenseitige Induktion eine Sekundärwirbelspule, die ein sekundäres Strömungsfeld induziert, welches die Anströmgeschwindigkeit des Parallelstromes partiell erhöht.

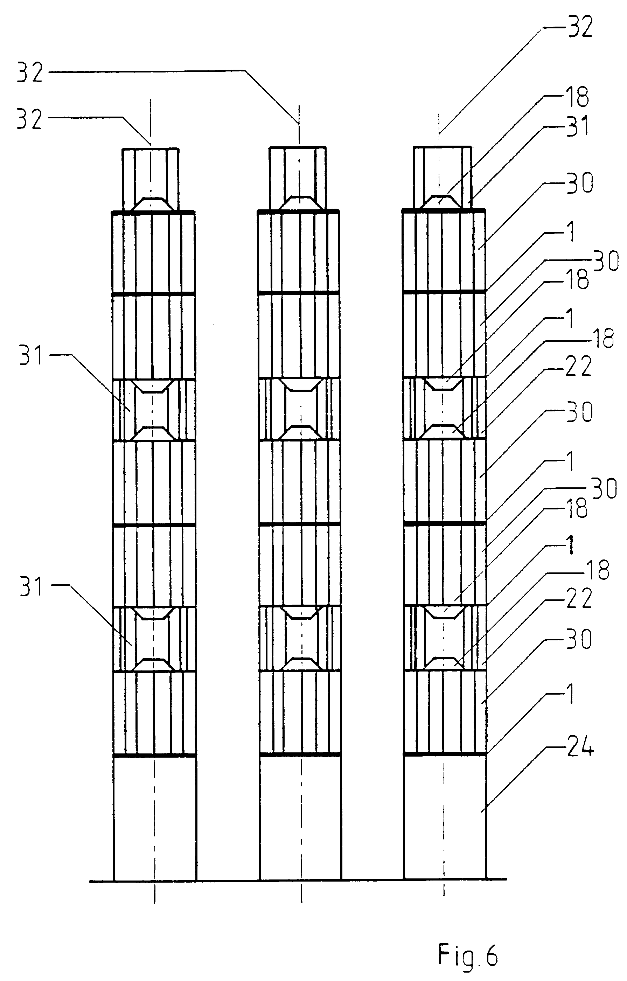

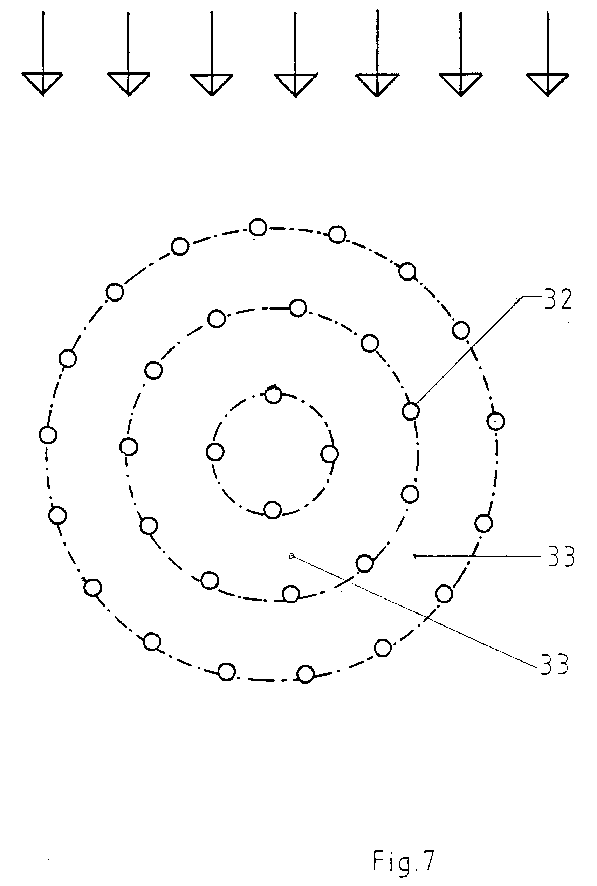

In Fig. 6 sind mehrere Anordnungen nach Fig. 2 zur Bildung eines Turms als Windenergieanlage 32 dargestellt. Dabei bilden die Anströmsäulen 30 und die Säulen 22 die tragende Konstruktion, die durch die Grundplatte 11 und die Platte 12 statisch stabilisiert sind. Entsprechend Fig. 7 können solche Windenergieanlagen 32 auf konzentrischen Kreisen einer Grundfläche angeordnet werden, wobei die ringförmigen Bereiche zwischen den Windenergieanlagen 32 Beruhigungszonen 33 bilden. Die Abstände der Windenergieanlagen 32 untereinander werden so gewählt, daß jede Windenergieanlage 32 gleich große Staudrücke in der Hauptwindrichtung ausbilden kann.

## Patentansprüche

1. Verfahren zur Erzeugung von nutzbarer Energie aus Parallelströmungen, die ein Strömungsmodul zur Erzeugung eines Potentialwirbels mit mindestens einer Einströmöffnung und mindestens einer Ausströmöffnung anströmen, bei dem über eine spiralförmige Drehströmung der Potentialwirbel erzeugt wird, durch den eine in seiner Wirkrichtung angeordnete Turbine als Energiewandler angetrieben wird,
**dadurch gekennzeichnet,**
daß die spiralförmige Drehströmung über den Staudruck erzeugt wird, der durch die das Strömungsmodul anströmende Parallelströmung hervorgerufen wird, wobei der auf einen aus einer Mehrzahl von beweglichen Klappen gebildeten äußeren Hohlkörper wirkende Staudruck einen Teil der Klappen öffnet und sich im Innern des äußeren Hohlkörpers ein Gesamtdruck aufbaut, der die nicht vom Staudruck erfaßten Klappen schließt, daß die entstehende Drehströmung durch ein eine Durchströmöffnung aufweisendes Trennelement in einen ersten und einen zweiten Teilstrom aufgeteilt wird, und die Drehströmung des ersten Teilstroms über einen tangential beschleunigt angeströmten inneren Hohlkörper in eine Drallströmung umgewandelt wird, die durch den an der Ausströmöffnung des inneren Hohlkörpers, die gleichzeitig die Ausströmöffnung des Strömungsmoduls ist, herrschenden Unterdruck nach außen gerichtet wird, wobei aus der Drallströmung nach ihrem Durchtreten durch die Ausströmöffnung durch die Scherkräfte der an ihm vorbeiströmenden Parallelströmung der Potentialwirbel ausgebildet wird, der aus dem zweiten Teilstrom und/oder von außen her einen Volumenstrom durch die Durchströmöffnung des Trennelementes in das Innere des inneren Hohlkörpers zieht, und daß aus dem zweiten Teilstrom mit einer Mehrzahl von wirbelerzeugenden Elementen eine Vielzahl von Wirbelströmungen erzeugt wird, die gleichfalls in den inneren Hohlkörper geleitet werden und das Strömungsfeld des Potentialwirbels verstärken.

2. Verfahren nach Anspruch 1, Dadurch gekennzeichnet, daß die Gesamtheit der wirbelerzeugenden Elemente gedreht werden.

3. Einrichtung zur Erzeugung von nutzbarer Energie aus Parallelströmungen mit einem mindestens eine Einströmöffnung und mindestens eine Ausströmöffnung aufweisenden Strömungsmodul zur Erzeugung eines Potentialwirbels und einer in der Wirkrichtung des Potentialwirbels angeordneten Turbine,
**dadurch gekennzeichnet,**
daß das Strömungsmodul (1) einen aus einer Vielzahl von Klappen (4) aufgebauten äußeren Hohlkörper (3) aufweist, der beidseitig mit Platten (11,12) abgedeckt ist und in einer Platte (11) die Ausströmöffnung (10) vorgesehen ist, wobei die Klappen (4) sich unter Einfluß des Staudrucks der Parallelströmung um axiale Schwenkachsen selbsttätig öffnen und/oder schließen, daß konzentrisch zu dem äußeren Hohlkörper (3) innerhalb desselben ein innerer Hohlkörper (9) mit mindestens einer Einströmöffnung (28) zur tangentialen Einströmung angeordnet ist, dessen eines Ende die Ausströmöffnung (10) des Strömungsmoduls (1) bildet und dessen anderes Ende von einem radial im äußeren Hohlkörper (3) angeordneten Trennelement (5) unter Freilassung einer Durchströmöffnung abgedeckt ist und daß in dem durch das Trennelement (5) vom inneren Hohlkörper (9) abgetrennten Bereich (7) eine Mehrzahl von wirbelerzeugenden Elementen (16) vorgesehen sind, deren Wirbelströmungen in den Innenraum des inneren Hohlkörpers (9) gerichtet sind.

4. Einrichtung nach Anspruch 3, dadurch gekennzeichnet, daß die wirbelerzeugenden Elemente tragflügelartig ausgebildet sind und im Bereich der Durchströmöffnung (8) des Trennelementes (5) um diese herum angeordnet sind.

5. Einrichtung nach Anspruch 3, dadurch gekennzeichnet, daß die wirbelerzeugenden Elemente (16) als ringförmig angeordnete vorzugsweise konusförmige Wirbeldüsen ausgebildet sind, deren Ausströmöffnungen in das Innere des inneren Hohlkörpers (9) gerichtet sind und deren Einströmöffnungen im vom inneren Hohlkörper (9) abgetrennten Bereich (7) zur tangentialen Einströmung ausgebildet sind.

6. Einrichtung nach einem der Ansprüche 3 bis 5, dadurch gekennzeichnet, daß die wirbelerzeugenden Elemente (16) als eine Einheit drehbar angeordnet sind.

7. Einrichtung nach einem der Ansprüche 3 bis 6, dadurch gekennzeichnet, daß die Ausströmöffnung (10) des Strömungsmoduls (1) von einer kegelstumpfförmigen Leitvorrichtung (18) umgeben ist, die vorzugsweise mit nach außen offenen Schlitzen versehen ist.

8. Einrichtung nach einem der Ansprüche 3 bis 7, dadurch gekennzeichnet, daß in dem vom inneren Hohlkörper (9) abgetrennten Bereich (7) ein weiteres Trennelement (37) angeordnet ist, wobei die Einströmöffnung (23) der wirbelerzeugenden Elemente (16) nur in einem Teil des vom inneren Hohlkörper (9) abgetrennten Bereichs (7) vorgesehen sind.

9. Einrichtung nach einem der Ansprüche 3 bis 8, dadurch gekennzeichnet, daß der äußere Hohlkörper (3) von Anströmsäulen umgeben ist, die die Querschnittsform eines gleichschenkligen Dreiecks mit angesetztem Kreissegment aufweisen, wobei die geraden Flächen der Anströmsäulen (30) die Anströmflächen (2) bilden, die nach außen gerichtet sind.

10. Einrichtung nach einem der Ansprüche 3 bis 9, dadurch gekennzeichnet, daß über der Ausströmöffnung (10) ein drehbarer Turbulenzschirm (31) zum gesteuerten Abfließen des Potentialwirbels angeordnet ist.

11. Einrichtung nach einem der Ansprüche 3 bis 10, dadurch gekennzeichnet, daß mindestens zwei Strömungsmodule (1) mit Abstand zueinander übereinander angeordnet sind, wobei die Ausströmöffnungen (10) sich gegenüberliegen.

## Claims

1. A process of generating usable energy from parallel flows which flow against a flow unit for generating a potential vortex, which unit comprises at least one inflow aperture and at least one outflow aperture and in the case of which a spiral-like rotary flow generates the potential vortex which drives a turbine constituting an energy converter arranged in the direction of flow of the potential vortex,
**characterised in**
that the spiral-like rotary flow is generated by the built-up pressure which is caused by the parallel flows flowing against the flow unit; that the built-up pressure acting on an outer hollow member formed by a plurality of movable flaps opens some of the flaps, with an overall pressure building up inside the outer hollow member and closing the flaps not affected by the built-up pressure; that the resulting rotary flow is divided into a first and a second partial flow by a separating element comprising a through-flow aperture and that the rotary flow of the first partial flow is converted into a swirl flow by an inner hollow member which is impinged in a tangentially accelerated way, which swirl flow is directed outwardly by the vacuum existing at the outflow aperture of the inner hollow member, which, at the same time, constitutes the outflow aperture of the flow unit; that the swirl flow, after having passed through the outflow aperture, forms the potential vortex as a result of the shear forces of the parallel flows flowing past the swirl flow, which potential vortex draws a flow volume from the second partial flow and/or from the outside through the through-flow aperture of the separating element into the interior of the inner hollow member; and that a plurality of vortex generating elements is used to generate from the second partial flow a plurality of vortex flows which are also guided into the inner hollow member and intensify the flow field of the potential vortex.

2. A process according to claim 1,
characterised in
that all vortex generating elements are rotated.

3. A device for generating usable energy from parallel flows, having a flow unit which comprises at least one inflow aperture and at least one outflow aperture and which is intended to generate a potential vortex, and having a turbine arranged in the direction of flow of the potential vortex,
**characterised in**
that the flow unit (1) comprises an outer hollow member (3) which is composed of a plurality of flaps (4) and which is covered by plates (11, 12) at both ends, one plate (11) being provided with the outflow aperture (10); that the flaps (4), under the influence of the built-up pressure of the parallel flows, open and/or close automatically around axial pivot axes; that an inner hollow member (9) is arranged inside, and concentrically relative to, the outer hollow member (3) and is provided with at least one inflow aperture (28) to allow tangential flowing-in conditions, the one end of said inner hollow member (9) forming the outflow aperture (10) of the flow unit (1) and its other end being covered by a separating element (5) arranged radially in the outer hollow member (3) while leaving free a through-flow aperture; and that in the region (7) separated from the inner hollow member (9) by the separating element (5) there is arranged a plurality of vortex generating elements (16) whose vortex flows are directed into the interior of the inner hollow member (9).

4. A device according to claim 3,
characterised in
that the vortex generating elements are designed to be air-foil-like and are arranged in the region of, and around, the through-flow aperture (8) of the separating element (5).

5. A device according to claim 3,
characterised in
that the vortex generating elements (16) are provided in the form of annularly arranged, preferably conical vortex nozzles whose outflow apertures are directed into the interior of the inner hollow member (9) and whose inflow apertures are provided in the region (7) separated from the inner hollow member (9) to allow tangential flowing-in conditions.

6. A device according to any one of claims 3 to 5,
characterised in
that the vortex generating elements (16) are provided in the form of one rotatable unit.

7. A device according to any one of claims 3 to 6,
characterised in
that the outflow aperture (10) of the flow unit (1) is surrounded by a truncated-cone-shaped guiding device (18) which is provided preferably with outwardly opening slots.

8. A device according to any one of claims 3 to 7,
characterised in
that a further separating element (37) is arranged in the region (7) separated from the inner hollow member (9), the inflow aperture (23) of the vortex generating elements (16) being provided in only part of the region (7) separated from the inner hollow member (9).

9. A device according to any one of claims 3 to 8,
characterised in
that the outer hollow member (3) is surrounded by impinged columns whose cross-section has the shape of an equilaterial triangle with an attached segment of a circle, the straight surfaces of the impinged columns (30) forming the impinged surfaces (2) which are directed outwardly. (2).

10. A device according to any one of claims 3 to 9,
characterised in
that above the outflow aperture (10), there is arranged a rotatable turbulence screen (31) to allow the potential vortex to flow off in a controlled way.

11. A device according to any one of claims 3 to 10,
characterised in
that at least two flow units (1) are arranged and spaced one above the other, with the outflow apertures (10) being arranged opposite one another.

## Revendications

1. Méthode de génération de l'énergie utile des courants parallèles qui, pour générer un tourbillon de potentiel, affluent un module de courant comprenant au moins un orifice d'admission et au moins un orifice d'évacuation, la méthode causant la génération du tourbillon de potentiel par l'intermédiaire d'un courant rotatoire spiralé, au moyen duquel une turbine arrangée en direction effective du tourbillon est actionnée comme convertisseur d'énergie,
**caractérisé en ce** que le courant rotatoire spiralé est généré par l'intermédiaire de la pression dynamique qui est produite par le courant parallèle affluant le module de courant, la pression dynamique agissant sur un corps creux extérieur formé d'une multiplicité des trappes mobiles ouvrant une part de ces trappes et, à l'intérieur du corps creux extérieur, une pression totale s'éleve qui ferme les trappes qui ne sont pas saisies par la pression dynamique; que le courant rotatoire, en train de s'engendrer, est, par un élément de séparation présentant un orifice de pénétration, divisé en un premier courant partiel et un deuxième courant partiel et le courant rotatoire du premier courant partiel est transformé, par l'intermédiaire d'un corps creux intérieur afflué de manière tangentiellement accélérée, en un courant de torsion qui, par la pression subatmosphérique régnant à l'orifice d'évacuation du corps creux intérieur, cet orifice étant, en même temps, l'orifice d'évacuation du module de courant, est dirigé vers l'extérieur, le tourbillon de potentiel étant formé du courant de torsion après son passage à travers l'orifice d'évacuation par les efforts de cisaillement du courant parallèle passant ledit orifice, ce tourbillon de potentiel tirant, du deuxième courant partiel et/ou du dehors, un courant de volume à travers l'orifice de pénétration d'élément de séparation vers l'intérieur du corps creux intérieur, et que, du deuxième courant partiel, une pluralité des courants tourbillonnaires sont générés au moyen d'une multiplicité des éléments produisant des tourbillons, lesdits courants tourbillonnaires étant également guidés jusqu'au coeur du corps creux intérieur et intensifiant le champ de courant du tourbillon de potentiel.

2. Méthode selon Revendication 1, caractérisé en ce que les éléments produisant des tourbillons sont tournés dans leur totalité.

3. Dispositif pour générer de l'énergie utile des courants parallèles, comprenant un module de courant, qui a au moins un orifice d'admission et au moins un orifice d'évacuation et qui sert de générer un tourbillon de potentiel, ainsi qu'une turbine arrangée en direction effective du tourbillon de potentiel,
**caractérisé en ce** que le module (1) de courant présente un corps creux (3) extérieur, qui est constitué par une pluralité des trappes (4) et qui, des deux côtés, est couvert de plaques (11, 12), et l'orifice (10) d'évacuation est prévu dans une plaque (11), les trappes (4), sous l'influence de la pression dynamique du courant parallèle, s'ouvrant et/ou se fermant de manière automatique autour des axes de pivotement axiaux; que, concentriquement au corps creux (3) extérieur et à l'intérieur de ce corps, un corps creux (9) intérieur est arrangé, comprenant au moins un orifice (28) d'admission pour une admission tangentielle, et l'une extrémité de ce corps forme l'orifice (10) d'évacuation du module (1) de courant alors que l'autre extrémité dudit corps est couverte d'un élément (5) de séparation arrangé radialement dans le corps creux (3) extérieur, en laissant libre un orifice de pénétration, et que, dans la région (7) séparée du corps creux (9) intérieur par l'élément (5) de séparation, une multiplicité des éléments (16) produisant des tourbillons sont prévus, dont les courants tourbillonnaires sont dirigés vers l'intérieur du corps creux (9) intérieur.

4. Dispositif selon Revendication 3, caractérisé en ce que les éléments produisant des tourbillons sont construits en forme des ailes portantes et, dans la région d'orifice (8) de pénétration d'élément (5) de séparation, sont arrangés autour de cet orifice.

5. Dispositif selon Revendication 3, caractérisé en ce que les éléments (16) produisant des tourbillons sont construits comme tuyères à turbulence arrangées en forme d'anneau, de préférence en forme de cône, les orifices d'évacuation dudites tuyères étant dirigés vers l'intérieur du corps creux (9) intérieur et les orifices d'admission dudites tuyères étant, dans la région (7) séparée du corps creux (9) intérieur, construits de sorte qu'ils entraînent une admission tangentielle.

6. Dispositif selon quelconque des Revendications 3 à 5, caractérisé en ce que les éléments (16) produisant des tourbillons sont arrangés de sorte qu'ils peuvent être tournés comme une unité.

7. Dispositif selon quelconque des Revendications 3 à 6, caractérisé en ce que l'orifice (10) d'évacuation du module (1) de courant est entouré d'un mécanisme (18) de guidage tronconique qui, de préférence, est pourvu des fentes ouvertes vers extérieur.

8. Dispositif selon quelconque des Revendications 3 à 7, caractérisé en ce qu'un autre élément (37) de séparation est arrangé dans la région (7) séparée du corps creux (9) intérieur, les orifices (23) d'admission des éléments (16) produisant des tourbillons étant prévus seulement dans une partie de la région (7) séparée du corps creux (9) intérieur.

9. Dispositif selon quelconque des Revendications 3 à 8, caractérisé en ce que le corps creux (3) extérieur est entouré des colonnes d'affluence qui présentent un profil en travers en forme d'un triangle isocèle au segment de cercle rapporté, les surfaces droites des colonnes (30) d'affluence constituant les surfaces (2) d'affluence qui sont dirigées vers l'extérieur.

10. Dispositif selon quelconque des Revendications 3 à 9, caractérisé en ce qu'un écran-turbulence (31) rotatif pour effectuer une décharge commandée du tourbillon de potentiel est arrangé au-dessus d'orifice (10) d'évacuation.

11. Dispositif selon quelconque des Revendications 3 à 10, caractérisé en ce qu'au moins deux modules (1) de courant sont arrangés l'un sur l'autre en étant séparés l'un de l'autre, les orifices (10) d'évacuation étant en face l'un de l'autre.
